# EUROPEAN PATENT SPECIFICATION

(11) **EP 4 312 074 B1**
(45) Date of publication and mention of the grant of the patent: **06.05.2026**
(21) Application number: 23186706.0
(22) Date of filing: 20.07.2023
(51) Int. Cl.: G02B 27/01

(54) **PICTURE GENERATION APPARATUS AND HEAD-UP DISPLAY INCLUDING SAME**
BILDERZEUGUNGSVORRICHTUNG UND HEAD-UP-ANZEIGE DAMIT
APPAREIL DE GÉNÉRATION D'IMAGE ET AFFICHAGE TÊTE HAUTE LE COMPRENANT

(30) Priority: 25.07.2022 KR 20220091802
(43) Date of publication of application: 31.01.2024
(73) Proprietor: Hyundai Mobis Co., Ltd., Gangnam-gu Seoul (KR)
(72) Inventor: KIM, Yoo Na, Suwon-si, Gyeonggi-do 16508 (KR); SONG, Ki Hyuk, Yongin-si, Gyeonggi-do 16810 (KR)
(74) Representative: Frenkel, Matthias Alexander

(56) References cited:
- WO-A1-2015/093294
- US-A1- 2011 267 702
- US-A1- 2020 124 848
- US-A1- 2022 026 712
- US-A1- 2022 122 498

## Description

### CROSS-REFERENCE TO RELATED APPLICATIONS

The present application claims priority to Patent Application No. 10-2022-0091802, filed on July 25 2022 in Korea.

### TECHNICAL FIELD

The present disclosure relates to a picture generation apparatus and a head-up display including the same.

### BACKGROUND

The content described in this section merely provides background information on the present disclosure and does not constitute the prior art.

A head-up display (HUD) is a device that allows a driver to see various pieces of information related to current speed, navigation, a fuel amount or the driving of a vehicle by illuminating a windshield of the vehicle. Since the driver may easily see various pieces of information related to the driving of the vehicle using the head-up display, the driver may keep eyes forward with little dispersion of viewpoints even while driving.

The head-up display may include a case that defines a receiving space therein, a Picture Generation Unit (PGU) that outputs an image related to the driving information of the vehicle, a reflection member, a dust cover, etc. The head-up display is installed under the windshield of the vehicle due to its characteristics.

The PGU may include a light source that emits light, a Printed Circuit Board (PCB) on which the light source is disposed, a Liquid Crystal Display (LCD) that outputs an image, a lens that uniformly focuses light transmitted from the light source on the LCD, and a diffuser that evenly diffuses the light to the LCD, etc.

On the other hand, as external light (e.g. the sun) is incident on the PGU included in the head-up display of the vehicle, internal components may be deteriorated and damaged, or the reflected external light may be incident on a user's eye again.

If the LCD is rotated and placed to prevent external light from entering the inside of the PGU and damaging components or to prevent the light from being reflected back to a driver's eye, there is a problem in that the image becomes non-uniform as a distance from the light source varies depending on each area of the LCD.

US 2011/267702 A1 discloses a head up display system for vehicles that presents an image to be seen through a windshield by a vehicle occupant by projecting the display image onto the windshield from a display device placed inside the vehicle. The housing of the head up display is placed with respect to the windshield such that the external light reflected by the prism lens of the head up display impinges upon the walls of the housing.

WO 2015/093294 A1 discloses a head-up display device that can suppress display characteristics from being deteriorated due to external light and can suppress a decrease in contrast.

US 2022/026712 A1 discloses a virtual image display device for a vehicle that displays a virtual image. External light such as sunlight is incident on the display screen in the opposite direction to the light of the image. The external light is reflected in the reflection direction different from that of the light of the image.

US 2020/124848 A1 discloses a head-up display in which a display unit is protected from damage caused by light entering from the outside and a method for its operation. In the event of strong light entering at the critical angle, this is detected by the sensor, whereupon the parking unit, driven by the control unit, moves the head-up display into a parking position in which the light entering at the critical angle does not fall onto the display element.

US 2022/122498 A1 discloses a method and apparatus for determining whether to release a protection mode of the HUD based on vehicle information.

### SUMMARY

In view of the above, the present disclosure provides a picture generation apparatus, in which an LCD is rotated to be offset from the incident optical axis of external light, thus preventing the external light from being incident on the picture generation apparatus to damage a component or preventing the reflected external light from being incident on a user's eye.

According to an embodiment, a picture generation apparatus is configured such that a light source and an LCD arranged to be offset from the incident optical axis of external light are arranged to be parallel to each other, thus preventing an image from becoming non-uniform according to each area.

According to an embodiment, a picture generation apparatus is configured such that the travel path of light emitted from a rotated light source is changed using an optical path control unit, thus preventing an image from being out of a user's field of view or being distorted.

The objectives to be achieved by the present disclosure are not limited to the above-mentioned objectives, and other objectives which are not mentioned will be clearly understood by those skilled in the art from the following description.

According to an embodiment, a picture generation apparatus is advantageous in that an LCD is rotated to be offset from the incident optical axis of external light, thus preventing the external light from being incident on the picture generation apparatus to damage a component or preventing the reflected external light from being incident on a user's eye.

According to an embodiment, a picture generation apparatus is advantageous in that a light source and an LCD arranged to be offset from the incident optical axis of external light are arranged to be parallel to each other, thus preventing an image from becoming non-uniform according to each area.

According to an embodiment, a picture generation apparatus is advantageous in that the travel path of light emitted from a rotated light source is changed using an optical path control unit, thus preventing an image from being out of a user's field of view or being distorted.

### BRIEF DESCRIPTION OF THE DRAWINGS

Fig. 1 is a diagram illustrating the configuration of a head-up display according to an embodiment of the present disclosure.
Fig. 2 is a block diagram illustrating the configuration of a picture generation apparatus according to an embodiment of the present disclosure.
Fig. 3 is a diagram illustrating the configuration and operation principle of a picture generation unit according to an embodiment of the present disclosure.

### DETAILED DESCRIPTION

Hereinafter, some exemplary embodiments of the present disclosure will be described in detail with reference to the accompanying drawings. In the following description, like reference numerals preferably designate like elements, although the elements are shown in different drawings. Further, in the following description of some embodiments, a detailed description of known functions and configurations incorporated therein will be omitted for the purpose of clarity and for brevity.

Additionally, various terms such as first, second, A, B, (a), (b), etc., are used solely to differentiate one component from the other but not to imply or suggest the substances, order, or sequence of the components. Throughout this specification, when a part 'includes' or 'comprises' a component, the part is meant to further include other components, not to exclude thereof unless specifically stated to the contrary. The terms such as 'unit', 'module', and the like refer to one or more units for processing at least one function or operation, which may be implemented by hardware, software, or a combination thereof.

Each element of the apparatus or method in accordance with the present invention may be implemented in hardware or software, or a combination of hardware and software. The functions of the respective elements may be implemented in software, and a microprocessor may be implemented to execute the software functions corresponding to the respective elements.

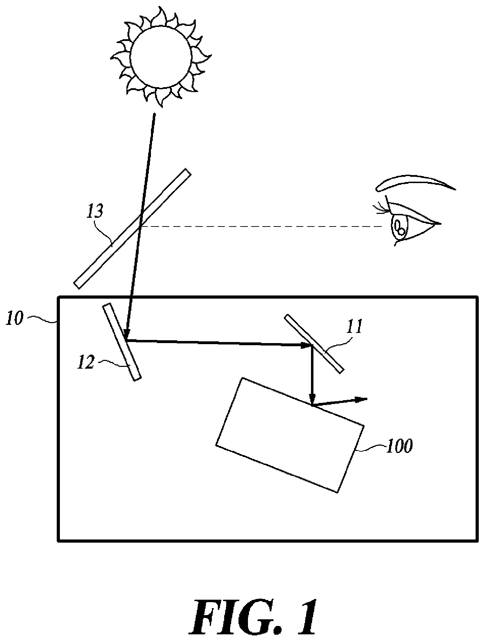

Fig. 1 is a diagram illustrating the configuration of a head-up display according to an embodiment of the present disclosure.

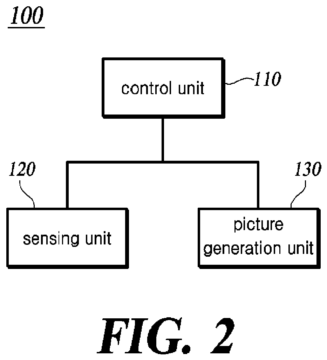

Fig. 2 is a block diagram illustrating the configuration of a picture generation apparatus according to an embodiment of the present disclosure.

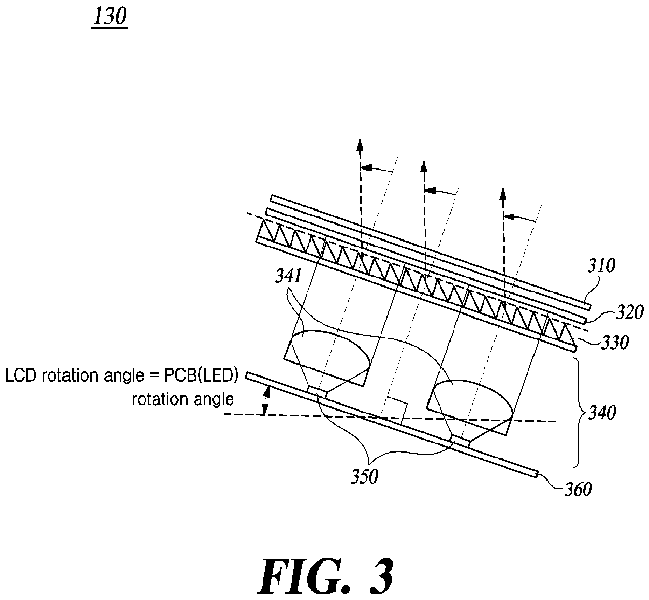

Fig. 3 is a diagram illustrating the configuration and operation principle of a picture generation unit according to an embodiment of the present disclosure.

Referring to Figs. 1 to 3, the head-up display 10 according to an embodiment of the present disclosure may include a picture generation apparatus 100, a first reflection member 11, and a second reflection member 12.

The picture generation apparatus 100 may include a control unit 110, a sensing unit 120, and a picture generation unit 130.

The picture generation unit 130 may include a Liquid Crystal Display (LCD) 310, a diffuser 320, an optical path control unit 330, an optical path guiding unit 340, a light source 350, and a Printed Circuit Board (PCB) 360.

The picture generation apparatus 100 is configured to emit an image using light. The picture generation apparatus 100 included in the head-up display 10 outputs an image about the driving information of the vehicle, and then transmits the image to the reflection members 11 and 12 (see Fig. 1). The reflection members 11 and 12 may reflect and/or magnify the image emitted from the picture generation apparatus 100.

The image emitted by the picture generation apparatus 100 is transmitted to the first reflection member 11. The first reflection member 11 reflects the image and then transmits it to the second reflection member 12. The second reflection member 12 reflects the image so that a driver or a user can see the image displayed on the windshield 13 of the vehicle and/or a separately provided projection member. Although the first reflection member 11 may be a folding mirror and the second reflection member 12 may be an aspheric mirror, the present disclosure is not necessarily limited thereto.

As will be described later, at least a portion of the picture generation apparatus 100 according to the present disclosure may be rotated to be offset from the incident optical axis of external light as shown in Figs. 1 and 3. Thus, this prevents the component of the picture generation apparatus 100 from being damaged by external light, and prevents the external light from being reflected again and being incident on a user's eye.

The picture generation unit 130 is configured to emit the image using light. As described above, the picture generation unit 130 may include all or some of the LCD 310, the diffuser 320, the optical path control unit 330, the optical path guiding unit 340, the light source 350, and the PCB 360.

The LCD 310 emits the image using light emitted from the light source 350. The image emitted from the LCD 310 may be reflected by one or more reflection members 11 and 12 to be displayed on the windshield 13 of the vehicle.

According to the present disclosure, in order to prevent the external light from being directly incident on the picture generation apparatus 100 and damaging the component, the LCD 310 may be rotated to be offset from the optical axis. Here, the optical axis means an incident optical axis along which external light is incident on the picture generation apparatus 100 and/or an optical axis along which the image formed by the picture generation apparatus 100 is incident on a user's eye, as shown in Figs. 1 and 3. The optical axis along which the image formed by the picture generation apparatus 100 is incident on the user's eye and the incident optical axis of the external light may be equal to or different from each other depending on design conditions. The LCD 310 may be configured to be rotatable at 0 to 360 °.

The LCD 310 is rotated in a first direction (e.g. clockwise or counterclockwise) with respect to the optical axis. At this time, the optical path control unit 330, which will be described later, changes the travel path of light emitted from the light source 350 to a second direction opposite to the first direction.

Even if the LCD 310 is rotated and arranged to be offset from the optical axis, the external light reflected by the LCD 310 may deteriorate or otherwise damage components inside the picture generation apparatus 100. Therefore, the rotation direction and angle of the LCD 310 may be determined so that an optical component that is vulnerable to heat is not disposed in a direction where the external light is reflected and travelled.

Further, the rotation direction and angle of the LCD 310 may be determined so that the external light reflected by the LCD 310 does not interfere with the transfer path of the image emitted from the picture generation apparatus 100 and transmitted through the reflection members 11 and 12.

The LCD 310 may be rotated and installed to be offset from the optical axis, but may be configured to be rotatable after initial installation. In this case, the LCD (e.g. the rotation, the rotation angle, etc.) may be controlled by the control unit 110. The LCD 310 may be configured to rotate together (or be integrally rotatable) with the optical path control unit 330 and the PCB 360.

The diffuser 320 is a member that evenly diffuses light emitted from the light source 350 and transmitted through the optical path guiding unit 340 and the optical path control unit 330, and may be disposed on the rear surface of the LCD 310. Since the diffuser 320 is disposed on the rear surface of the LCD 310, light may be uniformly incident on the LCD 310. The number of diffusers 320 may be plural.

The optical path control unit 330 is a component that controls the travel path (direction) of light emitted from the light source 350, and is disposed between the PCB 360 on which the light source 350 is placed and the LCD 310. When the optical path guiding unit 340 and/or the diffuser 320 are disposed between the PCB 360 and the LCD 310, the optical path control unit 330 may be disposed between the optical path guiding unit 340 and the diffuser 320.

As described above, when the LCD 310 is disposed to be offset from the optical axis, the optical path control unit 330 controls the path (direction) of light so as to compensate for the offset angle. To be more specific, when the LCD 310 is rotated in the first direction with respect to the optical axis, the optical path control unit 330 compensates for the offset angle by changing the travel path of light emitted from the light source 350 to the second direction opposite to the first direction. Thus, it is possible to prevent the image from being out of a user's field of view or being distorted.

The optical path control unit 330 may include or be configured in the form of a prism to change or control the travel path of light. At least a portion of the optical path control unit 330 may include or be configured in the form of a Fresnel lens having a plurality of continuous concentric grooves etched into a plastic sheet or the like. Since the Fresnel lens is manufactured by etching continuous concentric grooves into the plastic sheet or the like, it is thin, light, and has a shape with excellent light condensing ability. Since the optical path control unit 330 includes or is configured in the form of the Fresnel lens, the picture generation apparatus 100 may be made smaller and lighter. Further, since each concentric groove of the Fresnel lens may be regarded as a plurality of different lenses, it is possible to change the travel path of light in various and efficient ways. However, the shape of the optical path control unit 330 is not limited thereto, and the optical path control unit 330 may include one or more lenses and/or prisms depending on the purpose and use, which may include or be configured in the form of the Fresnel lens. In addition, it is to be noted that the optical path control unit 330 may have various structures, for example, may be convex or concave in a specific direction according to other conditions such as the locations of other optical components and the incident angle of external light.

Since the optical path control unit 330 is configured to be rotatable, it may be controlled by the control unit 110 and be configured to rotate together or be integrally rotatable with the PCB 360 and the LCD 310.

The optical path guiding unit 340 is a component for guiding the travel path of light emitted from the light source 350, and may be disposed between the PCB 360 and the optical path control unit 330. The optical path guiding unit 340 may guide the travel path so that light emitted from the light source 350 is transmitted through the optical path control unit 330 and the diffuser 320 to the LCD 310. To be more specific, when light is emitted from the light source (e.g. LED) in the form of Lambertian, the optical path guiding unit 340 may guide the path of the emitted light toward the LCD 310. The optical path guiding unit 340 may include one or more collimating lenses 341. The optical path guiding unit 340 may have various shapes within the range of guiding the travel path such that the light emitted from the light source 350 is directed to the LCD 310.

The light source 350 is a member for emitting light, and may be disposed on the PCB 360. The number of light sources 350 may be plural, and each light source may be a Light Emitted Diode (LED). The LCD 310 emits the image using light emitted from the light source 350. The PCB 360 on which the light source 350 is disposed is arranged to be parallel to the LCD 310, thus allowing light to be uniformly transmitted to all areas of the LCD 310. The light source 350 and the PCB 360 are configured to be rotatable, may be controlled by the control unit 110, and may be configured to rotate together or be rotatable integrally with the optical path control unit 330 and the LCD 310.

The control unit 110 may control the picture generation unit 130. The control unit 110 may receive information (e.g. intensity of external light, incident angle, etc.) acquired by the sensing unit 120 from the sensing unit 120. The control unit 110 may rotate the picture generation unit 130 on the basis of the information acquired by the sensing unit 120. Thus, it is possible to efficiently prevent external light from being incident depending on the surrounding conditions of the picture generation apparatus 100, and to provide a user with a high-quality image.

The sensing unit 120 may be configured to sense the intensity of external light, the incident angle of external light, etc. The sensing unit 120 may transmit the acquired information to the control unit 110. The sensing unit 120 may include one or more sensors (e.g. photo sensors).

When only the LCD is rotated and disposed to be offset and thereby prevent the external light from being directly incident, a distance from the PCB that is disposed unparallel to the LCD to the LCD varies depending on the area of the LCD. Thus, light reaching a location farther from the light source is further spread and has low luminance. Light reaching a location closer thereto is relatively less spread and has high luminance, and the intensity and luminance of light vary depending on the area of the LCD, thereby providing a non-uniform image to a user. To this end, when the PCB is rotated to be parallel to the LCD, light transmitted from the light source disposed on the PCB may be offset from the optical axis, so that the image may be out of a user's field of view or be distorted.

The picture generation apparatus 100 according to the present disclosure is configured such that the LCD 310 is rotated to be offset from the optical axis, the PCB 360 is rotated to be parallel to the LCD 310, and the optical path control unit 330 is disposed between the LCD 310 and the PCB 360 to control the travel path (direction) of light, thus providing a uniform image to a user while preventing the direct incidence of external light, and preventing the image from being out of the user's field of view or being distorted. Further, at least a portion of the optical path control unit 330 includes or is configured in the form of the Fresnel lens, so that the size and weight of the picture generation apparatus 100 can be reduced.

It is to be noted that the specific structure (e.g. the rotational arrangement of the LCD 310 and the light source 350, the optical path control unit 330, etc.) of the picture generation apparatus 100 according to the present disclosure may change the head-up display of the vehicle as well as the path of light, may prevent the incidence of external light and simultaneously change the path of light, or may be applied to all optical devices requiring miniaturization and weight reduction as necessary.

Various implementations of systems and techniques described herein may be realized as digital electronic circuits, integrated circuits, field programmable gate arrays (FPGAs), application specific integrated circuits (ASICs), computer hardware, firmware, software, and/or combinations thereof. These various implementations may include one or more computer programs executable on a programmable system. The programmable system includes at least one programmable processor (which may be a special-purpose processor or a general-purpose processor) coupled to receive and transmit data and instructions from and to a storage system, at least one input device, and at least one output device. The computer programs (also known as programs, software, software applications or codes) contain commands for a programmable processor and are stored in a "computer-readable recording medium".

The computer-readable recording medium includes all types of recording devices in which data readable by a computer system is stored. Such a computer-readable recording medium may be a non-volatile or non-transitory medium, such as ROM, CD-ROM, magnetic tape, floppy disk, memory card, hard disk, magneto-optical disk, or a storage device, and may further include a transitory medium such as a data transmission medium. In addition, the computer-readable recording medium may be distributed in a computer system connected via a network, so that computer-readable codes may be stored and executed in a distributed manner.

Various implementations of systems and techniques described herein may be embodied by a programmable computer. Here, the computer includes a programmable processor, a data storage system (including volatile memory, non-volatile memory, or other types of storage systems, or combinations thereof) and at least one communication interface. For example, the programmable computer may be one of a server, a network device, a set top box, an embedded device, a computer expansion module, a personal computer, a laptop, a personal data assistant (PDA), a cloud computing system, or a mobile device.

Although exemplary embodiments of the present disclosure have been described for illustrative purposes, those skilled in the art will appreciate that various modifications, additions, and substitutions are possible, without departing from the idea and scope of the claimed invention. Therefore, exemplary embodiments of the present disclosure have been described for the sake of brevity and clarity. The scope of the technical idea of the present embodiments is not limited by the illustrations. Accordingly, one of ordinary skill would understand that the scope of the claimed invention is not to be limited by the above explicitly described embodiments but by the appended claims.

## Claims

1. A picture generation apparatus (100) comprising:
a printed circuit board, PCB, (360);
one or more light sources (350) disposed on the PCB (360) and configured to emit light;
a liquid crystal display, LCD, (310) configured to emit an image based on the light emitted from the one or more light sources (350); and
an optical path control unit (330) disposed between the PCB (360) and the LCD (310) and configured to change a travel path of the light emitted from the one or more light sources (350),
wherein the LCD (310) is disposed to be offset from an incident optical axis of external light,
wherein the PCB (360) and the LCD (310) are parallel to each other,
**characterised in that** the LCD (310) is configured to rotate in a first direction with respect to the incident optical axis of the external light, and
wherein the optical path control unit (330) changes the travel path of the light to a second direction opposite to the first direction.

2. The picture generation apparatus (100) of claim 1, wherein the optical path control unit (330) comprises a prism.

3. The picture generation apparatus (100) of claim 1 or 2, wherein the optical path control unit (330) comprises a Fresnel lens.

4. The picture generation apparatus (100) of any one of claims 1 to 3, wherein the optical path control unit (330) comprises one or more lenses.

5. The picture generation apparatus (100) of claim 4, wherein each of the one or more lenses has a Fresnel lens-shape.

6. The picture generation apparatus (100) of any one of claims 1 to 5, further comprising an optical path guiding unit disposed between the PCB (360) and the optical path control unit (330) and configured to guide the light emitted from the light source to the optical path control unit (330).

7. The picture generation apparatus (100) of claim 6, wherein the optical path guiding unit comprises one or more collimating lenses.

8. The picture generation apparatus (100) of any one of claims 1 to 7, wherein the picture generation apparatus further comprises a control unit configured to rotate the PCB (360), the LCD (310) and the optical path control unit.

9. The picture generation apparatus (100) of claim 8, further comprising a sensing unit configured to sense at least one of an intensity and an incident angle of the external light, wherein the control unit rotates the PCB (360), the LCD (310) and the optical path control unit (330) based on at least one of the intensity and the incident angle of the external light sensed by the sensing unit.

10. The picture generation apparatus (100) of claim 9, wherein the PCB (360), the LCD (310) and the optical path control unit (330) are configured to rotate together.

11. The picture generation apparatus (100) of claim 9 or 10, wherein the sensing unit comprises one or more sensors.

12. A head-up display (10) comprising:
the picture generation apparatus (100) according to any of claims 1 to 11; and
one or more reflection members (11, 12) configured to reflect the image emitted from the picture generation apparatus (100).

## Patentansprüche

1. Bilderzeugungsvorrichtung (100), umfassend:
eine Leiterplatte, PCB, (360);
eine oder mehrere Lichtquellen (350), die auf der PCB (360) angeordnet und dazu eingerichtet sind, Licht zu emittieren;
eine Flüssigkristallanzeige, LCD, (310), die dazu eingerichtet ist, ein Bild basierend auf dem von der einen oder den mehreren Lichtquellen (350) emittierten Licht zu emittieren; und
eine optische Pfadsteuerungseinheit (330), die zwischen der PCB (360) und der LCD (310) angeordnet und dazu eingerichtet ist, einen Ausbreitungspfad des von der einen oder den mehreren Lichtquellen (350) emittierten Lichts zu ändern,
wobei die LCD (310) so angeordnet ist, dass sie zu einer optischen Einfallsachse von externem Licht versetzt ist,
wobei die PCB (360) und die LCD (310) parallel zueinander sind,
**dadurch gekennzeichnet, dass** die LCD (310) dazu eingerichtet ist, sich in einer ersten Richtung in Bezug auf die optische Einfallsachse des externen Lichts zu drehen, und
wobei die optische Pfadsteuerungseinheit (330) den Ausbreitungspfad des Lichts in eine zweite, der ersten Richtung entgegengesetzte Richtung ändert.

2. Bilderzeugungsvorrichtung (100) nach Anspruch 1, wobei die optische Pfadsteuerungseinheit (330) ein Prisma umfasst.

3. Bilderzeugungsvorrichtung (100) nach Anspruch 1 oder 2, wobei die optische Pfadsteuerungseinheit (330) eine Fresnel-Linse umfasst.

4. Bilderzeugungsvorrichtung (100) nach einem der Ansprüche 1 bis 3, wobei die optische Pfadsteuerungseinheit (330) eine oder mehrere Linsen umfasst.

5. Bilderzeugungsvorrichtung (100) nach Anspruch 4, wobei jede der einen oder mehreren Linsen eine Fresnel-Linsenform aufweist.

6. Bilderzeugungsvorrichtung (100) nach einem der Ansprüche 1 bis 5, ferner umfassend eine optische Pfadführungseinheit, die zwischen der PCB (360) und der optischen Pfadsteuerungseinheit (330) angeordnet und dazu eingerichtet ist, das von der Lichtquelle emittierte Licht zu der optischen Pfadsteuerungseinheit (330) zu führen.

7. Bilderzeugungsvorrichtung (100) nach Anspruch 6, wobei die optische Pfadführungseinheit eine oder mehrere Kollimatorlinsen umfasst.

8. Bilderzeugungsvorrichtung (100) nach einem der Ansprüche 1 bis 7, wobei die Bilderzeugungsvorrichtung ferner eine Steuerungseinheit umfasst, die dazu eingerichtet ist, die PCB (360), die LCD (310) und die optische Pfadsteuerungseinheit zu drehen.

9. Bilderzeugungsvorrichtung (100) nach Anspruch 8, ferner umfassend eine Erfassungseinheit, die dazu eingerichtet ist, eine Intensität und/oder einen Einfallswinkel des externen Lichts zu erfassen, wobei die Steuerungseinheit die PCB (360), die LCD (310) und die optische Pfadsteuerungseinheit (330) basierend auf der Intensität und/oder dem Einfallswinkel des von der Erfassungseinheit erfassten externen Lichts dreht.

10. Bilderzeugungsvorrichtung (100) nach Anspruch 9, wobei die PCB (360), die LCD (310) und die optische Pfadsteuerungseinheit (330) dazu eingerichtet sind, sich gemeinsam zu drehen.

11. Bilderzeugungsvorrichtung (100) nach Anspruch 9 oder 10, wobei die Erfassungseinheit einen oder mehrere Sensoren umfasst.

12. Head-up-Anzeige (10), umfassend:
die Bilderzeugungsvorrichtung (100) nach einem der Ansprüche 1 bis 11; und
ein oder mehrere Reflexionselemente (11, 12), die dazu eingerichtet sind, das von der Bilderzeugungsvorrichtung (100) emittierte Bild zu reflektieren.

## Revendications

1. Appareil de génération d'image (100) comprenant:
une carte de circuit imprimé, PCB, (360);
une ou plusieurs sources lumineuses (350) disposées sur la PCB (360) et conçues pour émettre de la lumière;
un écran à cristaux liquides, LCD, (310) conçu pour afficher une image en fonction de la lumière émise par la ou les sources lumineuses (350); et
une unité de réglage de chemin optique (330) disposée entre la PCB (360) et l'écran LCD (310) et conçue pour modifier le chemin de la lumière émise par la ou les sources lumineuses (350),
dans lequel l'écran LCD (310) est disposé de manière à être décalé par rapport à l'axe optique incident de la lumière extérieure,
dans lequel la PCB (360) et l'écran LCD (310) sont parallèles l'un à l'autre,
**caractérisé en ce que** l'écran LCD (310) est conçu pour pivoter dans une première direction par rapport à l'axe optique incident de la lumière externe, et
dans lequel l'unité de réglage de chemin optique (330) modifie le chemin de la lumière pour l'orienter dans une deuxième direction, opposée à la première.

2. Appareil de génération d'image (100) selon la revendication 1, dans lequel l'unité de réglage de chemin optique (330) comprend un prisme.

3. Appareil de génération d'image (100) selon la revendication 1 ou 2, dans lequel l'unité de réglage de chemin optique (330) comprend une lentille de Fresnel.

4. Appareil de génération d'image (100) selon l'une quelconque des revendications 1 à 3, dans lequel l'unité de réglage de chemin optique (330) comprend une ou plusieurs lentilles.

5. Appareil de génération d'image (100) selon la revendication 4, dans lequel chacune de la ou des lentilles a la forme d'une lentille de Fresnel.

6. Appareil de génération d'image (100) selon l'une quelconque des revendications 1 à 5, comprenant en outre une unité de guidage de chemin optique disposée entre la PCB (360) et l'unité de réglage de chemin optique (330) et conçu pour guider la lumière émise par la source lumineuse vers l'unité de réglage de chemin optique (330).

7. Appareil de génération d'image (100) selon la revendication 6, dans lequel l'unité de guidage de chemin optique comprend une ou plusieurs lentilles de collimation.

8. Appareil de génération d'image (100) selon l'une quelconque des revendications 1 à 7, dans lequel l'appareil de génération d'image comprend en outre une unité de commande conçue pour faire tourner la PCB (360), l'écran LCD (310) et l'unité de réglage de chemin optique.

9. Appareil de génération d'image (100) selon la revendication 8, comprenant en outre une unité de détection conçue pour détecter au moins l'un parmi une intensité et un angle incident de la lumière extérieure, dans lequel l'unité de commande fait tourner la PCB (360), l'écran LCD (310) et l'unité de réglage de chemin optique (330) en fonction d'au moins l'une parmi l'intensité et l'angle incident de la lumière extérieure détectée par l'unité de détection.

10. Appareil de génération d'image (100) selon la revendication 9, dans lequel la PCB (360), l'écran LCD (310) et l'unité de commande de chemin optique (330) sont conçus pour tourner ensemble.

11. Appareil de génération d'image (100) selon la revendication 9 ou 10, dans lequel l'unité de détection comprend un ou plusieurs capteurs.

12. Affichage tête haute (100) comprenant:
l'appareil de génération d'image (100) selon l'une quelconque des revendications 1 ou 11; et
un ou plusieurs éléments de réflexion (11? 12) conçus pour réfléchir l'image émise par l'appareil de génération d'image (100).
